# EUROPÄISCHE PATENTANMELDUNG

(11) **EP 2 636 654 A1**
(43) Veröffentlichungstag der Anmeldung: **11.09.2013**
(21) Anmeldenummer: 12001488.1
(22) Anmeldetag: 05.03.2012
(51) Int. Cl.: C04B 7/32, C04B 7/345, C04B 28/06

(54) **Ternesit als Additiv zu Calciumsulfoaluminatzement**

(71) Anmelder: HeidelbergCement AG, 69120 Heidelberg (DE)
(72) Erfinder: Bullerjahn, Frank, 69123 Heidelberg (DE); Schmitt, Dirk, 69117 Leimen (DE); Batog, Barbara, 34-480 Jablonka (PL); Ben Haha, Mohsen, 69117 Heidelberg (DE); Zajac, Maciej, 69181 Leimen (DE)
(74) Vertreter: Wagner, Jutta

(57) **Zusammenfassung**

Die vorliegende Erfindung betrifft die Herstellung von Terensit-Klinker mit 20 bis 100 Gew.-% C₅S₂$ und weniger als 15 Gew.-% C₄A₃$, sowie den Einsatz von Ternesit als Additiv zu Calcium-sulfoaluminat(ferrit)(Belit)-Klinker (CSA(F)(B)), - zement, und Bindemittel enthaltend 10 - 90 Gew.-% CSA(F)(B) und 90 bis 10 Gew.-% Ternesit.

## Beschreibung

Die vorliegende Erfindung betrifft die Herstellung und den Einsatz von Ternesit als Additiv zu Calciumsulfoaluminat(ferrit)(Belit)-Klinker (CSA(F)(B)), -zement, und Bindemitteln.

Die Zementindustrie hat einen erheblichen Anteil an der globalen CO₂-Produktion. Die weltweit wachsende Nachfrage nach Zement vor allem in Entwicklungsländern sowie steigende Kosten für Rohstoffe, Energie und CO₂-Zertifikate führten in den letzten Jahren zur zunehmenden Verringerung des Klinkerfaktors, zum Beispiel durch eine Zugabe von Kalksteinmehlen, Flugaschen und granulierten Hüttensanden als Klinkerersatzstoffe. Diese Verwendung von Nebenprodukten und Abfallprodukten anderer Industrien sowie die Entwicklung alternativer Bindemittel rücken zunehmend in den Fokus des politischen, wissenschaftlichen und wirtschaftlichen Interesses.

Weltweit fallen im Zuge der thermischen Abfallbeseitigung / Energiegewinnung, Stahlerzeugung, Edelmetallgewinnung etc., enorme Mengen an Materialien an, die im Folgenden als industrielle Nebenprodukte bezeichnet werden. Je nach Qualität / Zusammensetzung / Anwendungsgebiet können diese teilweise oder vollständig in verschiedenen Prozessen und Produkten wiederverwendet werden, z.B. als Korrektiv zur Klinkerherstellung von Portlandzement, als Additiv für Beton und als Zuschlag für Asphalt und Beton, etc.

Aufgrund verschiedener Faktoren, wie zum Beispiel der fehlenden Gleichmäßigkeit (Chemismus und Mineralogie) und der Schadstoffgehalte (Organik, Schwermetalle, etc...), ist die Verwendung der industriellen Nebenprodukte aber nicht unproblematisch. Unter anderem kann eine sinkende Reaktivität / Qualität von OPC-Klinker bzw. eine mangelnde Raumbeständigkeit von Zementen dazu führen, dass jährlich große Mengen solcher Materialien kostenintensiv deponiert bzw. als Haldenmaterial und Deponiematerial herangezogen werden müssen. Schwierigkeiten können auch bei der Deponierung solcher Materialien auftreten, z.B. können Auslaugungsprozesse zur Kontamination der umliegenden Flächen und Gewässer / Grundwässer führen. Die Verwendung / Aufbereitung industrieller Nebenprodukte stellt daher eine große Herausforderung und eine noch immer nicht gelöste Aufgabe dar. Eine möglichst effiziente und nachhaltige Ressourcennutzung wird zukünftig unverzichtbar sein und besitzt eine globale Relevanz.

Neben der Substitution von Klinker im Zement und von Rohstoffen in der Rohmehlmischung wurde auch versucht, andere hydraulisch härtende Bindemittel zu finden. Hierzu zählen Calciumsulfoaluminatzemente und Zemente mit Belit als Hauptkomponente.

Es werden folgende in der Zementindustrie üblichen Abkürzungen verwendet: H - H₂O, C - CaO, A - Al₂O₃, F - Fe₂O₃, M - MgO, S - SiO₂ und $ - SO₃. Um die weitere Beschreibung zu vereinfachen werden zumeist Verbindungen in ihrer reinen Form angegeben, ohne explizite Angabe von Mischreihen / Substitution durch Fremdionen usw. wie sie in technischen und industriellen Materialien üblich sind. Wie jeder Fachmann versteht, kann die Zusammensetzung der in dieser Erfindung namentlich genannten Phasen, in Abhängigkeit vom Chemismus des Rohmehls und der Art der Herstellung, durch die Substitution mit diversen Fremdionen variieren, wobei solche Verbindungen ebenfalls in den Schutzbereich der vorliegenden Erfindung fallen und von der Angabe der reinen Phasen/Verbindungen umfasst sein sollen.

### Stand der Technik

Calciumsulfoaluminatzement wird großtechnisch üblicherweise durch die Sinterung homogenisierter, feinteiliger, natürlicher Rohstoffe, wie Kalkstein, Bauxit, Gips / Halbhydrat / Anhydrit, aluminiumreicher Ton und einer SiO₂-Quelle, in einem Drehrohrofen zwischen 1100 °C - 1350 °C hergestellt und weist einen signifikant unterschiedlichen Chemismus und Phasengehalt im Vergleich zu Portlandzement auf. In Tabelle 1 sind die in Portlandzement (OPC) und Sulfoaluminatzement (BCSAF) vorliegenden Phasen gegenübergestellt. Auch beim Sulfoaluminatzement können verschiedene industrielle Nebenprodukte wie z.B. Hüttensand und Flugaschen dem Rohmehl zugesetzt werden.

**Tabelle 1: Chemismus und Mineralogie von OPC im Vergleich zu BCSA(F)**

| | Temperatur [°C] | Chem. Zusammensetzung [%] | Miner. Zusammensetzung [%] |
|---|---|---|---|
| | | | C₃S [ 50-70 ] |
| | | CaO [ 55-75 ] | C₂S [ 10-40 ] |
| | | SiO₂ [ 15-25 ] | C₃A [ 0-15 ] |
| OPC | -1450 | Al₂O₃ [ 2-6 ] | C₄AF [ 0-20 ] |
| | | Fe₂O₃ [ 0-6 ] | C$ [ 2-10 ] |
| | | SO₃ [ 1.5-4.5 ] | C [ 0-3 ] |
| | | | Cc [ 0-5 ] |
| | | CaO [ 40-70 ] | C₂S [ 2-70 ] |
| | | SiO₂ [ 2-40 ] | C₄A₃$ [ 10-75 ] |
| BCSAF | -1250 | Al₂O₃ [ 5-40 ] | C₄AF [ 0-30 ] |
| | | Fe₂O₃ [ 0-15 ] | C$ [ 5-30 ] |
| | | SO₃ [ 5-25 ] | Nebenphasen |

Ein entscheidender, hydraulisch aktiver Bestandteil von CalciumsulfoaluminatZement ist ein (Misch)Kristall der Verbindungen folgender Zusammensetzung 3 CaO • 3 Al₂O₃ • CaSO₄ - 3 CaO • 3 Fe₂O₃ • CaSO₄ (C₄A₃$ - C₄F₃$; Sulfoaluminat-Sulfoferrit, Ye'elimit), welcher nach dem Anmachen mit Wasser und in Gegenwart von löslichen Sulfaten und zusätzlichen Calciumträgern zu Ettringit, 3 CaO • (Al₂O₃ / Fe₂O₃) • 3 CaSO₄ • 32 H₂O, sowie verschiedenen Monophasen reagiert. Die sich bildenden (Hydrat)Phasen (z.B. Ettringit [AFₜ], Monophasen [AFₘ] etc.) können eine Vielzahl verschiedener (Schad)Stoffe, durch z.B. den Einbau in die Kristallstruktur der Hydratphase, Anlagerung an Partikeloberflächen, Fixierung im Zementleim, Ausfällung als z.B. Hydroxide / Karbonate, etc., binden und dauerhaft fixieren. Zwei weitere hydraulisch aktive Phasen des Calciumsulfoaluminatzements sind Dicalciumsilicat (C₂S) und Tetracalciumaluminatferrit (C₄AF), welche jedoch vorrangig zur Endfestigkeit beitragen.

EP 0 838 443 A1 beschreibt die Herstellung von Calciumsulfoaluminat - Zement, ausgehend von Aluminium enthaltenden Reststoffen.

DE 196 44 654 A1 beschreibt die Herstellung eines Calciumsulfoaluminat - Zements aus aufbereiteten Salzschlacken.

FR 2 928 643 beschreibt die Herstellung und Zusammensetzung eines Belit-Calciumsulfoaluminat(ferrit) - Klinkers aus einer Mischung mit Mineralen, die Calcium, Aluminium, Silizium, Eisen und Schwefel, vorzugsweise in Form von Sulfat, enthalten. Die Sinterung der Rohmehlmischung erfolgt durch das Durchlaufen eines Brennofens mit einer Durchlaufzeit von mindestens 15 Minuten.

FR 2 946 978 beschreibt die Herstellung und Zusammensetzung eines Belit-Calciumsulfoaluminat(ferrit) - Klinkers aus einer Mischung verschiedener Rohstoffe.

EP 1 171 398 B1 (DE 600 29 779 T2) beschreibt die Sinterung spezifischer Rohmaterialien bei 900 bis 1200 °C, um im Ofen Spezialklinker zu produzieren, die hohe Konzentrationen an Kristall X = {(C, K, N, M)₄(A, F, Mn, P, T, S)₃(Cl, $)} und Kristall Y = {(C₂S)₃(CS)₃Ca(f, cl)₂} und/oder Kristall Z = {C₅S₂$} aufweisen. Diese Klinker werden mit hydraulischem Zement oder Zement vom Typ Portland gemischt, um fertige Zementzusammensetzungen zu produzieren.

Aufgabe der Erfindung war die Bereitstellung eines verbesserten Calciumsulfoaluminat(ferrit) - Klinkers, - Zements und - Bindemittels, welche weniger negativen Einfluss auf die Umwelt haben, indem industrielle Nebenprodukte einen großen Teil der Rohmehlmischung ausmachen können und/oder dessen Herstellung weniger CO₂ freisetzt.

Es wurde nun überraschend gefunden, dass die Phase C₅S₂$ (Ternesit auch als Sulfospurrit oder Sulfatspurrit bezeichnet) eine signifikant reaktive Komponente in Sulfoaluminatzementen darstellt. In der Literatur (siehe z.B. "Synthesis of Calcium Sulfoaluminate Cements From Al2O3-Rich By-products from Aluminium Manufacture", Milena Marroccoli et al., The second international conference on sustainable construction materials and technologies 2010, "Synthesis of Special Cements from Mixtures Containing Fluidized Bed Combustion Waste, Calcium Carbonate and Various Sources of Alumina", Belz et al, 28th Meeting of the Italian Section of The Combustion Institute 2005, "Fluidized Bed Combustion Waste as a Raw Mix Component for the Manufacture of Calcium Sulphoaluminate Cements", Belz G et al, 29th Meeting of the Italian Section of The Combustion Institute, 2006 und "The Fabrication of Value Added Cement Products from Circulating Fluidized Bed Combustion Ash", Jewell R.B et al, World of Coal Ash (WOCA) Covington, Kentucky, USA, 2007) wird die Phase C₅S₂$ als wenig reaktiv bzw. inert und unerwünscht beschrieben. Des Weiteren werden regelmäßig Methoden aufgezeigt diese "unerwünschte Phase" zu vermeiden. Überraschenderweise hat sich bei unseren Versuchen gezeigt, dass eine signifikante Menge dieser Phase C₅S₂$ schon innerhalb der ersten Tage der Hydratation reagiert und die Phasenzusammensetzung der hydratisierten Proben signifikant beeinflusst.

Die obige Aufgabe wird daher durch ein Verfahren zur Herstellung von Ternesit-Klinker und den Zusatz von Ternesit zu Calciumsulfoaluminatzement gelöst, bei dem Ternesit-Klinker durch Sintern einer Rohmehlmischung, die mindestens Quellen für CaO, SiO₂ und SO₃ enthält, erhalten wird, wobei die Sintertemperatur so eingestellt wird, dass der Ternesit-Klinker bezogen auf das Gesamtgewicht des Klinkers mindestens 20 Gew.-% C₅S₂$ enthält. Der Ternesit-Klinker wird, vor oder nach dem Mahlen, mit einem Calciumsulfoaluminat- oder Calciumsulfoaluminat-Belit-Klinker oder -Zement zu einem Bindemittel vermischt.

Im Rahmen der vorliegenden Erfindung meint Klinker ein Sinterprodukt, welches durch Brennen einer Rohstoffmischung bei erhöhter Temperatur erhalten wird und zumindest eine hydraulisch reaktive Phase enthält. Mit Zement wird ein mit oder ohne Zusatz weiterer Komponenten gemahlener Klinker bezeichnet. Bindemittel oder Bindemittelmischung bezeichnet ein Zement und typischerweise aber nicht zwingend weitere, fein gemahlene Komponenten enthaltendes, hydraulisch erhärtendes Gemisch, welches nach Zusatz von Wasser, ggfs. Zusatzmitteln und Gesteinskörnung, zur Anwendung gelangt.

Ein Klinker kann bereits alle notwendigen bzw. gewünschten Phasen enthalten und nach Vermahlen zu Zement direkt als Bindemittel zum Einsatz kommen. Erfindungsgemäß wird die Zusammensetzung des Bindemittels durch Vermischen von zwei oder mehreren Klinkern und/oder Zementen erhalten, wobei das Vermischen bereits vor (oder während) dem Mahlen und/oder im gemahlenen Zustand und/oder bei der Herstellung des Bindemittels erfolgt. Soweit nicht ausdrücklich ein Zeitpunkt des Vermischens genannt ist, beziehen sich die folgenden Beschreibungen auf Bindemittel (und Zemente), die in dieser Beziehung nicht beschränkt sind.

Soweit nichts anderes angegeben ist mit "reaktiv" eine hydraulische Reaktivität gemeint.

Phasen, wie zum Beispiel C₅S₂$, werden vorrangig stöchiometrisch angegeben, jedoch kann die genaue Zusammensetzung abweichen/variieren. Des Weiteren können verschiedene Fremdionen aus der Gruppe der Halogene, Nichtmetalle, Alkali- und Erdalkalimetalle, sowie Vertreter der Übergangs- und Halbmetalle und Metalle in die Kristallstruktur der Phase eingebaut werden. Für den erfindungsgemäßen Klinker sind diese alle geeignet. Vorzugsweise wird zum Beispiel Phosphat, Fluorid, Nitrat oder Chlorid in die Struktur von C₅S₂$ eingebaut, wodurch diese stabilisiert wird (z.B. bei höheren Temperaturen > 1200°C). Vorzugsweise kann Phosphat und / oder Eisen in die Phase C₄A₃$ eingebaut werden. Der Fremdioneneinbau kann zu einer erhöhten Bildungsgeschwindigkeit der Phase in der heißen Zone führen, was wiederum potentiell die benötigte Verweildauer verringert und / oder zu ihrer quantitativen Zunahme führen kann. Die Bezeichnung Al₂O₃(Fe₂O₃) bedeutet ebenso wie in der Angabe C₄(AₓF₁₋ₓ)₃$ für die Klinkerphase, dass Aluminium teilweise durch Eisen ersetzbar ist, d.h. x ist eine Zahl von 0,1 bis 1,0. Typischerweise liegt hauptsächlich Aluminium mit geringen Beimengungen von Eisen vor, es liegt aber im Rahmen der Erfindung erhebliche Mengen Eisen bis hin zu einem überwiegenden Gehalt an Eisen einzusetzen.

Ein Nachweis für den Einbau von Eisen ist die quantitative Abnahme eisenreicher Phasen (z.B. Fe₃O₄, C₂F und C₄AF), die Zunahme der Phase C₄A₃$ bzw. C₄(AₓFe₍₁₋ₓ₎)₃$, sowie die Zunahme der Peakintensitäten und des Gitterparameters c (Å) [Kristallsystem: Orthorhombisch] von 9,1610 [PDF-Nummer: 01-085-2210, Tetracalcium hexaaluminate sulfate(VI) - Ca₄ (Al₆O₁₂)(SO₄), ICSD Collection Kode: 080361, Calculated from ICSD using POWD-12++, (1997), Struktur: Calos, N.J., Kennard, C.H.L., Whittaker, A.K., Davis, R.L., J. Solid State Chem., 119, 1, (1995)] über 9,1784 [PDF-Nummer: 00-051-0162, Calcium Aluminum Iron Oxide Sulfate - Ca₄((Al_{0.95}Fe_{0.05}))₆O₁₂(SO₄), ICSD Collection Kode: -, Primärer Verweis: Schmidt, R., Pöllmann, H., Martin-Luther-Univ., Halle, Germany., ICDD Grant-in-Aid, (1999)] bis zu Werten von über 9,2000. Die Prüfung auf eine etwaige Mischkristallbildung kann ebenfalls mittels der Bestimmung der Besetzungsfaktoren bei einer Rietveld-Anpassungen durch Unter- oder Gemischtbesetzungen einzelner Atomlagen ermittelt werden. Ein weiterer rein qualitativer Indikator ist die zum Teil deutliche Farbveränderung der Klinker. So ändert sich die Farbe der Klinker von einem Kastanien- / Ockerbraun über Grünbraun bis hin zu einem hellen Grauton.

Die separate Herstellung von Ternesit oder einem Klinker bzw. Zement mit Ternesit als mindestens einer der Hauptkomponenten hat den Vorteil, dass Ternesit bzw. dieser Klinker in einem Schritt in einem Temperaturbereich von typischerweise 900 bis 1200°C, vorzugsweise 1050 bis 1150°C hergestellt werden kann. Bei diesen im Vergleich zu denen bei der Herstellung von Ye'elimit als Hauptphase enthaltenden Klinkern niedrigen Brenntemperaturen ergibt sich des weiteren der Vorteil, dass in dem erfindungsgemäßen Klinker gezielt erhöhte Magnesium / Periklas-Gehalte (> 2 Gew.-%) eingestellt werden können. Aufgrund der geringen Brenntemperatur kann Periklas in einer reaktiven Form vorliegen und zur Festigkeitsentwicklung / Hydratation beitragen. Aber auch höhere Brenntemperaturen sind je nach Rohstoffmischung brauchbar, sofern Ternesit in hohen Anteilen gebildet wird, bevorzugt sind 20 bis 100 % des Klinkers.

C₅S₂$ kann durch Sinterung von Rohstoffen, welche ausreichende Mengen CaO, SiO₂ und SO₃ bereitstellen, hergestellt werden. Dabei eignen sich einerseits reine bzw. im Wesentlichen reine Rohstoffe wie Calciumcarbonat oder -oxid, Quarzmehl oder Microsilica, und Calciumsulfat. Andererseits kann eine Vielzahl natürliche aber auch industrielle Materialien, wie zum Beispiel, aber nicht ausschließlich, Kalkstein, Bauxit, Ton / Tonstein, kalzinierte Tone (z.B. Metakaolin), Basalte, Periodite, Dunite, Ignimbrite, Karbonatite, Aschen / Schlacken / Hüttensande hoher und geringer Qualität (Mineralogie / Glasgehalt, Reaktivität, etc.), diverse Haldenmaterialien, Rot- und Braunschlämme, natürliche Sulfatträger, Entschwefelungsschlämme, Phosphogips, Rauchgasgips, Titanogips, Fluorogips, etc., in geeigneter Kombination als Rohmaterial verwendet werden. Es fallen ebenfalls namentlich nicht genannte Stoffe / Stoffgruppen in den Schutzbereich, welche die chemischen Mindestanforderungen als potentielle Rohstoffe erfüllen. Die Rohstoffe können, müssen aber nicht, vorbehandelt werden.

Ternesit kommt auch als Mineral vor, jedoch sind keine Lagerstätten bekannt, aus denen es in ausreichender Menge bzw. Reinheit gewonnen werden kann, so dass der Einsatz von "natürlichem" Ternesit zwar möglich, in der Praxis aber unwirtschaftlich ist. Eine Herstellung durch Sinterung geeigneter Rohstoffe ist erfindungsgemäß vorzuziehen.

Die Rohstoffe für die Herstellung des erfindungsgemäßen Ternesit-Klinkers werden in an sich bekannter Weise auf übliche Feinheiten gemahlen. Feinheiten von 2000 bis 10000 cm²/g, vorzugsweise im Bereich von 3000 bis 6000 cm²/g und besonders bevorzugt von 4000 bis 5000 cm²/g sind besonders gut geeignet. Die Mahlfeinheit richtet sich in erster Linie nach der Art und Zusammensetzung des eingesetzten Rohstoffes, dem Brennprozess (Temperatur, Verweildauer in der Sinterzone, etc.) sowie den angestrebten Eigenschaften des Bindemittels und den zur Verfügung stehenden technischen Möglichkeiten.

Soll die Herstellung möglichst reines C₅S₂$ ergeben, werden Rohstoffe gewählt, welche neben Quellen für CaO, SiO₂ und SO₃ keine oder nur wenig weitere Bestandteile enthalten. Die Umsetzung von Calciumcarbonat mit Quarzmehl und Calciumsulfat im Temperaturbereich von 900 bis 1200 °C, vorzugsweise 1050 bis 1150 °C ergibt C₅S₂$ mit einer Reinheit von > 99 %.

Es ist jedoch bevorzugt, wenn zur Herstellung von C₅S₂$ ein möglichst hoher Anteil kostengünstiger und umweltverträglicher Rohstoffe zum Einsatz kommt.

Umweltverträglich meint hierbei einen möglichst geringen Energieeinsatz und/oder die Schonung natürlicher Rohstoffe bzw. hochwertiger Abfall- und Nebenprodukte.

Eine Umsetzung von etwa 25% der Flugasche FA1 (siehe Beispiele) mit etwa 45% Kalkstein K1, etwa 8% Quarz (Merck, p.a.) und etwa 20 % MicroA (natürlicher Anhydrit) ergab einen Klinker mit einem C₅S₂$ Gehalt von > 70 % und bei Umsetzung von ~8% Metakaolin, ~58% K1, ~23% Micro A und ~10% SiO₂ wurden Reinheiten von > 80 % erreicht.

Die Umsetzung dieser Rohstoffe erfolgt bevorzugt ebenfalls im Temperaturbereich von 900 bis 1200 °C, vorzugsweise 1050 bis 1150 °C. Hierbei wird, im Gegensatz zur bekannten Sinterung derselben Rohstoffe mit dem Ziel der Bildung von C₄A₃$ bei mindestens 1200 °C, im wesentlichen Ternesit gebildet. Je nach Rohstoffzusammensetzung können auch höhere Temperaturen von z.B. bis 1300 °C geeignet sein, beispielsweise, wenn relevante Mengen Phosphor enthalten sind, wie es bei einer Verwendung von Phosphorgips der Fall ist. Im Unterschied zu den bekannten Verfahren/Klinkern steht erfindungsgemäß jedoch die Bildung von Ternesit im Fokus, die Sintertemperatur wird daher für dessen Bildung optimiert. Im Stand der Technik wurde dagegen die Sintertemperatur für die Bildung von C₄A₃$ optimiert, Ternesit sollte möglichst nicht gebildet werden. Demgegenüber wird erfindungsgemäß die Temperatur so gewählt, dass möglichst viel Ternesit gebildet wird und, sofern die Rohstoffe Quellen für Al₂O₃ bzw. Fe₂O₃ enthalten, der Gehalt an C₄(AₓF(₁₋ₓ))₃$ auf weniger als 15 % begrenzt wird. Zwar könnten auch Klinker mit mehr C₄(AₓF₍₁₋ₓ₎)₃$, mit x von 0,1 bis 1, vorzugsweise von 0,8 bis 0,95, verwendet werden, aber ein höherer Gehalt davon geht zu Lasten von Ternesit und die entsprechend höhere Sintertemperatur kann auch die Reaktivität von Ternesit beeinträchtigen.

Der Temperaturbereich von 900°C bis 1300°C, vorzugsweise von 1050°C bis 1150°C, sollte für einen Zeitraum von 10 min bis 180 min, vorzugsweise von 25 min bis 120 min und noch stärker bevorzugt von 30 min bis 60 min durchlaufen werden. Der Klinker kann zur weiteren Bildung gewünschter Phasen während der Abkühlung den Bereich von 900°C bis 750°C für einen Zeitraum von 5 min bis 120 min, vorzugsweise von 10 min bis 60 min durchlaufen. Abschließend oder aber auch ohne eine verzögerte Abkühlung, durch den Bereich von 900° bis 750°C, wird der Klinker in an sich bekannter Weise rapide abgekühlt, so dass weitere Phasenumwandlungen verhindert werden.

Klinker mit Ternesit als Hauptkomponente ohne nennenswerte Mengen Ye'elimit sind bisher stets vermieden worden und daher neu und ebenfalls Gegenstand der vorliegenden Erfindung, ebenso wie ihre Verwendung als Additiv in Calciumsulfoaluminat(ferrit) - Zement und - Bindemittel.

Der C₅S₂$ als Hauptkomponente enthaltende Klinker bzw. ein daraus durch Mahlen ohne Zusätze erhaltener Zement enthält erfindungsgemäß die folgenden Komponenten in den angegebenen Anteilen:

| | | |
|---|---|---|
| • | C₅S₂$ | 20 bis 100 Gew.-%, |
| | bevorzugt 30 bis 95 Gew.-% und noch stärker bevorzugt 40 bis 90 Gew.-% | |
| • | (α, β) C₂S | 0 bis 80 Gew.-%, |
| | bevorzugt 5 bis 70 Gew.-% und noch stärker bevorzugt 10 bis 60 Gew.-% | |
| • | C₄(AₓF₍₁₋ₓ₎)₃$ | 0 bis < 15 Gew.-%, |
| | bevorzugt 3 bis 12 Gew.-% und noch stärker bevorzugt 5 bis 10 Gew.-% | |
| • | C₂(A_{y}F_{(1-y)}) | 0 bis 30 Gew.-%, |
| | bevorzugt 5 bis 20 Gew.-% und noch stärker bevorzugt 8 bis 15 Gew.-% | |
| • | Reaktive Aluminate | 0 bis 20 Gew.-%, |
| | bevorzugt 1 bis 15 Gew.-% und noch stärker bevorzugt 3 bis 10 gew.-% | |
| • | Periklas (M) | 0 bis 25 Gew.-%, |
| | bevorzugt 1 bis 15 Gew.-% und noch stärker bevorzugt 2 bis 10 Gew.-% | |
| • | Nebenphasen | 0 bis 30 Gew.-%, |
| | bevorzugt 3 bis 20 Gew.-% und noch stärker bevorzugt 5 bis 10 Gew.-% | |

bezogen auf die gesamte Menge an Klinker/Zement, wobei sich die Anteile der Phasen zu 100% addieren.

Die Angabe (α, β) C₂S bedeutet, dass es sich um Polymorphe von C₂S und deren Gemische handeln kann, wobei die reaktiven α Polymorphe (z.B. α, α'_{L}, α'_{H}) bevorzugt werden. Vorzugsweise sind mindestens 5 Gew.-% α Polymorphe von C₂S enthalten, da diese vorteilhaft zu einer hoheh Frühfestigkeit beitragen.

Bei der Phase C₄(AₓF₍₁₋ₓ₎)₃$ liegt x im Bereich von 0,1 bis 1, vorzugsweise von 0,8 bis 0,95. Bei der Phase C₂(A_{y}F_{(1-y)}) liegt y im Bereich von 0,2 bis 0,8 und vorzugsweise im Bereich von 0,4 bis 0,6.

Unter reaktiven Aluminaten sind zum Beispiel, aber nicht ausschließlich, C₃A, CA und C₁₂A₇ zu verstehen.

Als Nebenphasen können zum Beispiel, aber nicht ausschließlich, Alkali/ErdalkaliSulfate, Quarze, Spinelle, Olivine, Pyroxene, Vertreter der Melilith- und Merwinit-Gruppe, Freikalk, Spurrit, Quarz und/oder ein röntgenamorpher Phasenbestand / eine Glasphase, in einem Anteil von 0 Gew.-% bis 30 Gew.-%, vorzugsweise von 2 Gew.-% bis 20 Gew.-% und besonders bevorzugt von 5 Gew.-% bis 15 Gew.-% auftreten. Der Freikalkgehalt des Klinkers liegt unter 5 Gew.-%, vorzugsweise unter 2 Gew.-% und besonders bevorzugt unter 1 Gew.-%.

Die Gehalte der Hauptoxide eines C₅S₂$ als Hauptphase enthaltenden, separat hergestellten Klinkers umfassen folgende Bereiche:

| | | |
|---|---|---|
| • | CaO | 40 bis 70 Gew.-%, bevorzugt 45 bis 60 Gew.-% und |
| | noch stärker bevorzugt 50 bis 55 Gew.-% | |
| • | SiO₂ | 5 bis 30 Gew.-%, bevorzugt 10 bis 25 Gew.-% und |
| | noch stärker bevorzugt 15 bis 23 Gew.-% | |
| • | SO₃ | 3 bis 30 Gew.-%, bevorzugt 5 bis 26 Gew.-% und |
| | noch stärker bevorzugt 8 bis 22 Gew.-% | |
| • | ∑(Al₂O₃+Fe₂O₃) | 0 bis 40 Gew.-%, bevorzugt 5 bis 30 Gew.-% und |
| | noch stärker bevorzugt 8 bis 20 Gew.-% | |
| • | MgO | 0 bis 25 Gew.-%, bevorzugt 2 bis 15 Gew.-% und |
| | noch stärker bevorzugt 5 bis 10 Gew.-% | |

bezogen auf die gesamte Menge an Klinker/Zement, wobei sich die Anteile der Gehalte zu 100% addieren.

Das erfindungsgemäße Bindemittel und/oder der erfindungsgemäße Zement umfasst als Hauptphasen zumindest C₅S₂$ und C₄(AₓF₍₁₋ₓ₎)₃$, mit x von 0,1 bis 1, vorzugsweise von 0,8 bis 0,95, sowie vorzugsweise auch C₂(AyF_{(1-y)}), mit y von 0,2 bis 0,8, vorzugsweise von 0,4 bis 0,6 und reaktive Polymorphe von C₂S. Typischerweise enthält das Bindemittel außerdem Anhydrit und kann Calciumferrit (z.B. C₂F), und/oder Aluminiumsilikate C₂AS, CAS₂, Tricalciumsilikat und Freikalk enthalten. Bevorzugt enthält das Bindemittel außerdem Zusatzmittel und/oder Zusatzstoffe sowie ggfs. weitere hydraulisch aktive Komponenten. Bei den Zusatzstoffen kann es sich um latent hydraulische, puzzolanische und/oder nicht hydraulisch aktive (z.B. gemahlener Kalkstein / Dolomit, gefälltes CaCO₃, Mg(OH)₂,Ca(OH)₂, Aluminiumhydroxide [z.B. amorphes Al(OH)₃], lösliche Alkali-Aluminate [z.B. Na₂Al₂O₄], Silica Fume) Komponenten handeln.

Zement und Bindemittel können durch Zumischen von Ternesit zu Calciumsulofaluminat(ferrit) (Belit) - Klinker, - Zement oder - Bindemittel erhalten werden.

Das erfindungsgemäße Bindemittel wird durch die Kombination eines Calciumsulfoaluminat(ferrit)(Belit) - Klinkers (CSA(F)(B)) oder - Zements mit einem Gehalt der reaktiven Phase C₄(AₓF₁₋ₓ)₃$ von 10 bis 80 Gew.-% (mit x von 1 bis 0,1) mit einem Klinker und/oder Zement, enthaltend von 20 bis 100 Gew.-% C₅S₂$ zu einem Zement / Bindemittel erhalten. Die mindestens zwei Komponenten liegen dabei in folgenden Anteilen vor:
- Klinker oder Zement enthaltend CSA(F)(B) 10 bis 90 Gew.-%, bevorzugt 20 bis 70 Gew.-% und noch stärker bevorzugt 30 bis 60 Gew.-%
- Klinker oder Zement enthaltend C₅S₂$ 10 bis 90 Gew.-%, bevorzugt 30 bis 80 Gew.-% und noch stärker bevorzugt 40 bis 70 Gew.-%.

Die Anteile sind bezogen auf die gesamte Menge an Bindemittel, wobei sich die Anteile zu 100% addieren.

Der Klinker mit der Hauptphase C₅S₂$ kann bei geeigneter Zusammensetzung, wie zum Beispiel, aber nicht ausschließlich, durch erhöhte Gehalte an reaktiven Aluminaten und Ferraten, als eigenständiges Bindemittel eingesetzt werden. Es ist jedoch vorteilhafter diesen mit CSA(F)(B) Klinkern und Zementen zu Bindemitteln mit optimierter Zusammensetzung zu kombinieren.

Vorzugsweise enthält der Zement bzw. die Bindemittelmischung außerdem als Zusatzmittel einen oder mehrere Abbinde- und / oder Erhärtungsbeschleuniger, vorzugsweise ausgewählt unter Komponenten mit verfügbarem Aluminium beziehungsweise solchen, die in Kontakt mit Wasser Aluminium, zum Beispiel in der Form von Al(OH)₄⁻ oder amorphes Al(OH)₃-Gel, freisetzen, wie zum Beispiel, aber nicht ausschließlich, lösliche Alkali-Aluminate [z.B. Na₂Al₂O₄, K₂Al₂O₄, etc.], amorphes Aluminiumhydroxid (z.B. Al(OH)₃), Calciumaluminatzement und/oder Geopolymer Binder. Des Weiteren kann der Zement bzw. die Bindemittelmischung als Zusatzmittel einen oder mehrere Abbinde- und / oder Erhärtungsbeschleuniger, ebenfalls in Kombination mit den vorgenannten Komponenten mit verfügbarem Aluminium, vorzugsweise ausgewählt unter Lithiumsalzen und -hydroxiden, anderen Alkalisalzen und -hydroxiden, Alkalisilikaten enthalten.

Zusätze, wie zum Beispiel Alkali-Aluminate und Alkalisalze, -silikate und -hydroxide, welche den pH-Wert der Lösung und damit einhergehend die Reaktivität von C₅S₂$ zusätzlich erhöhen, sind besonders bevorzugt und können in einer Menge im Bereich von 0,1 bis 10 Gew.-%, vorzugsweise von 0,5 bis 5 Gew.-% und noch stärker bevorzugt von 1 bis 2 Gew.-% dosiert werden.

Es ist weiter bevorzugt, wenn Betonverflüssiger und / oder Fließmittel und / oder Verzögerer, vorzugsweise auf Basis von Ligninsulfonaten, sulfoniertem Naphthalin-, Melamin- oder Phenolformaldehydkondensat, oder auf Basis von Acrylsäure-Acrylamidgemischen oder Polycarboxylatethern oder auf Basis von phosphatierten Polykondensaten, phosphatierten Alkylcarbonsäure und Salzen dieser, (Hydro)-Carbonsäuren und Carboxylate, Borax, Bosäure und borate, Oxalate, Sulfanilsäure, Aminocarbonsäuren, Salicylsäure und Acetylsalicylsäure, Dialdehyde enthalten sind.

Ein üblicher Calciumsulfoaluminat(ferrit)(Belit) - Klinker oder - Zement kann mit einem Klinker und/oder Zement, hauptsächlich enthaltend C₅S₂$ von 20 bis 100 Gew.-%, sowie weiteren Sulfatträgern gemeinsam vermahlen jedoch auch separat gemahlen und anschließend zu einem Zement / Bindemittel kombiniert werden.

Überraschend hat sich gezeigt, dass dem Bindemittel künstliche und natürliche (getemperte) Puzzolane (wie zum Beispiel, aber nicht ausschließlich Ziegelmehl, Flugaschen, Tuff, Trass, Sedimente mit hohem Anteil an löslicher Kieselsäure, getemperte Tone und Schiefer, künstliche Gläser, etc.), latent hydraulische Materialien (wie zum Beispiel, aber nicht ausschließlich, Hüttensand, künstliche Gläser, etc.) und deren Kombinationen mit relativ hohen Gehalten zugesetzt werden können (solche Materialien werden im folgenden als Cementitious Materials [CM] zusammengefasst). Dahingegen ist der Einsatz solcher Materialien typischerweise bei auf CSA(F)(B) basierten Bindemitteln, aufgrund des geringen pH-Wertes und/oder des geringen bzw. fehlenden Portlandit-Gehaltes, nur sehr begrenzt möglich (laut Literatur max. 15 Gew.-% [ 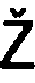 ivica V. (2000) Properties of blended sulfoaluminate belite cement. C. B. Mat., Vol. 14, pp 433-437; 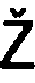 ivica V. (2001) Possibility of the modification of the properties of sulfoaluminate belite cement by its blending. Ceramics Silikaty, Vol. 45 (1), pp 24-30]). Durch die Zugabe eines auf Ternesit basierten Klinkers oder Zements zu Calciumsulfoaluminat(ferrit) (Belit) Klinker/Zements/Bindemittels können die Anteile solcher Zugaben und/oder Mischungen dieser in Summe von:

| | | |
|---|---|---|
| • | Bindemittel | 20 bis 95 Gew.-%, vorzugsweise 40 bis 80 Gew.-% und noch stärker bevorzugt 50 bis 70 Gew.-% |
| • | CM | 5 bis 80 Gew.-%, vorzugsweise 20 bis 60 Gew.-% und noch stärker bevorzugt 30 bis 50 Gew.-% |

reichen, wobei die Werte auf die gesamte Menge an Bindemittel bezogen sind und sich die Anteile mit den restlichen Bindemittelkomponenten zu 100% addieren.

Besonders bevorzugt werden künstliche und natürliche Puzzolane und latent hydraulische Materialien zugefügt, welche mit dem Ternesit einen eigenen Beitrag zur Festigkeitsentwicklung liefern. Es wurde nämlich überraschend gefunden, dass im Falle von Aluminium-reichen Puzzolanen/latent hydraulischen Materialien deren Aluminium, welches im Zuge der Hydratation freigesetzt wir (z.B. in der Form von Al(OH)₄⁻ oder als amorphes Aluminiumhydroxid(-Gel), mit Ternesit umgesetzt wird. Besonders vorteilhaft ist dabei, dass Ternesit in der Lage ist, kontinuierlich Sulfat bereitzustellen, so dass auch zeitlich spät vorliegendes Al(OH)₄⁻ oder amorphes Aluminiumhydroxid, zum Beispiel durch die Reaktion von Hüttensand und/oder Flugasche gebildet, umgesetzt werden kann. Sulfattreiben wird, zumindest weitgehend und in der Regel vollständig, verhindert.

Das erfindungsgemäße Bindemittel bildet in Gegenwart von Wasser durch die Reaktion mit zum Beispiel C₄A₃$ AFₜ- und AFₘ-Phasen sowie Al(OH)₃. Die Bildung/Freisetzung von Al(OH)₄⁻ oder als amorphes Aluminiumhydroxid(-Gel) führt zur fortschreitenden Reaktion der C₅S₂$-Phase und stellt einerseits zusätzliches Sulfat zur Verfügung, was wiederum AFₜ stabilisiert und eine mögliche Transformation zu AFₘ vermeidet / verringert, andererseits wird eine reaktive Form von C₂S freigesetzt, C₅S₂$ oder (C₂S)₂ • C$ ↔ 2 C₂S + 1 C$, die mit Wasser aber auch mit dem verfügbaren Al(OH)₃ reagieren und C₂AS • 8 H₂O (Strätlingit) sowie C-(A)-S-H bilden kann. Die Stabilisierung von AFₜ und der Verbrauch von Al(OH)₃ sowie die Verringerung der Porosität durch die Bildung von C₂AS • 8 H₂O und C-(A)-S-H des erfindungsgemäßen Zementes führt zu einer deutlichen Verbesserung der Dauerhaftigkeit zum Beispiel, aber nicht ausschließlich, durch die Verringerung der Gesamtporosität und / oder des verbundenen Porenraums und die Beständigkeit gegenüber einem möglichen Sulfatangriff. Bevorzugte Puzzolane / latent hydraulische Materialien sind getemperte Tone (z.B. Metakaolin) und Schiefer, Flugaschen, Hüttensande sowie künstliche (puzzolanische und latent hydraulische) Gläser.

Die Komponenten des erfindungsgemäßen Bindemittels können separat oder gemeinsam, sowie mit oder ohne zusätzliche Sulfatträger, in an sich bekannter Weise auf übliche Zementfeinheiten (nach Blaine) von 2000 bis 10000 cm²/g, vorzugsweise von 3000 bis 6000 cm²/g und besonders bevorzugt von 4000 bis 5000 cm²/g gemahlen werden. Als Sulfatträger eignen sich besonders Alkali- und / oder Erdalkalisulfate, vorzugsweise in Form von Gips und / oder Halbhydrat und / oder Anhydrit und / oder Magnesiumsulfat.

Der C₅S₂$ enthaltende Klinker, besonders wenn dieser wenig andere Phasen aufweist, lässt sich mit sehr geringem Energieeinsatz mahlen, so dass dieser, wenn zum Beispiel eine höhere Reaktivität (schnellere Umsetzung / Verbrauch) von C₅S₂$ erwünscht ist, auf höhere Feinheiten des C₅S₂$-enthaltenden Klinkers durch separates Mahlen oder Vormahlen eingestellt werden kann. Das ermahlene Produkt kann, wenn für eine spezielle Anwendung benötigt, auf eine Partikelgrößenverteilung mit d₅₀ kleiner 20 µm und d₉₀ kleiner 100 µm, beziehungsweise einem d₅₀ kleiner 5 µm und einem d₉₀ kleiner 20 µm aber auch einem d₅₀ kleiner 0,1 µm und einem d₉₀ kleiner 2 µm aufweisen.

Bei der Verarbeitung des erfindungsgemäßen Zementes bzw. eines diesen enthaltenden Bindemittels ist ein Wasser / Bindemittelwert von 0,2 bis 2 geeignet, bevorzugt von 0,3 bis 0,8 und besonders bevorzugt von 0,45 bis 0,72.

Zur Herstellung des Bindemittels können Einzelkomponenten oder Komponentengemische verwendet werden, je nach Qualität und Zusammensetzung der verfügbaren Rohstoffe bzw. Klinker.

Calciumsulfoaluminatklinker und - zemente mit der Hauptkomponente C₄A₃$ sind in verschiedenen Zusammensetzungen bekannt und verfügbar. Für das erfindungsgemäße Bindemittel sind diese alle geeignet. Beispielsweise sind folgende Calciumsulfoaluminatzemente kommerziell verfügbar:
**Lafarge Aether®:**

| | | | |
|---|---|---|---|
| Belit (α; +/-β) C₂S | 40 - 75%; | Ye'elimit C₄A₃$ | 15 - 35%; |
| Ferrit C₂(A,F) | 5 - 25%; | Nebenphasen | 0,1 - 10% |

**Lafarge Rockfast®:**

| | | | |
|---|---|---|---|
| Belit (α; +/-β) C₂S | 0 - 10%; | Ye'elimit C₄A3$ | 50 - 65% |
| Aluminat CA | 10 - 25%; | Gehlenit C₂AS | 10 - 25%; |
| Ferrit C₂(A,F) | 0 - 10%; | Nebenphasen | 0 - 10% |

**Italcementi Alipre®:**

| | | | |
|---|---|---|---|
| Belit (α; +/-β) C₂S | 10 - 25%; | Ye'elimit C₄A₃$ | 50 - 65%; |
| Anhydrit C$ | 0 - 25%; | Nebenphasen | 1 - 20% |

**Cemex CSA:**

| | | | |
|---|---|---|---|
| Belit (α; +/-β) C₂S | 10 - 30%; | Ye'elimit C₄A3$ | 20 - 40% |
| Anhydrit C$ | >1%; | Alit C₃S | >1 - 30%; |
| Freikalk CaO | <0.5 - 6%; | Portlandit Ca(OH)₂ | 0 - 7%; |
| Nebenphasen | 0 - 10% | | |

**Denka® CSA**

| | | | |
|---|---|---|---|
| Belit (α; +/-β) C₂S | 0 - 10%; | Ye'elimit C₄A₃$ | 15 - 25%; |
| Anhydrit C₂(A,F) | 30 - 40%; | Portlandit Ca(OH)₂ | 20 - 35%; |
| Freikalk CaO | 1 - 10%; | Nebenphasen | 0 - 10% |

**China Type II & III CSA**

| | | | |
|---|---|---|---|
| Belit (α; +/-β) C₂S | 10 - 25%; | Ye'elimit C₄A₃$ | 60 - 70%; |
| Ferrit C₂(A,F) | 1 - 15%; | Nebenphasen | 1 - 15% |

**Barnstone CSA**

| | | | |
|---|---|---|---|
| Belit (α; +/-β) C₂S | 22%; | Ye'elimit C₄A3$ | 60%; |
| Aluminat C₁₂A₇ | 5%; | Alit C₃S | 8%; |
| Ferrit C₂(A,F) | 4%; | Nebenphasen | 1% |

Die Calciumsulfoaluminatklinker und -zemente enthalten teilweise bereits Ternesit, üblicherweise jedoch in zu geringer Menge. Daher wird C₅S₂$ oder ein daran reiches Gemisch zugesetzt. Es scheint außerdem, dass erfindungsgemäß gezielt, d.h. bei optimierter Temperatur, hergestelltes C₅S₂$ reaktiver ist, als ein bei der Herstellung CSA(B) als Nebenprodukt erhaltenes Ternesit (siehe Beispiel 4 und 5).

Auch in Bezug auf den Belitgehalt genügen nicht alle Calciumsulfoaluminatklinker den Anforderungen des erfindungsgemäßen Bindemittels, so dass auch Belit oder Belit-reiche Gemische zugesetzt werden, sofern der Belitgehalt der Calciumsulfoaluminatkomponente und/oder Ternesitkomponente zu gering ist. Belit kann zum einen zur Frühfestigkeit aber im Wesentlichen signifikant zur Endfestigkeit der etwaigen Bindemittelsysteme und zum anderen zur Anregung von puzzolanischen und latent hydraulischen Materialien beitragen.

Der erfindungsgemäße Zement bzw. das erfindungsgemäße Bindemittel eignet sich hervorragend zur Verfestigung von Altlasten. Hierbei ist ein Gehalt an adsorptiv wirksamen Zusatzstoffen, z.B. Zeolithen und / oder lonenaustauscherharzen, bevorzugt. Bei der Immobilisierung von Schwermetallen in anorganischen Bindemitteln kann ein hoher pH-Wert von Vorteil sein, der die Bildung schwer löslicher Hydroxide begünstigt. Dies kann zum Beispiel, aber nicht ausschließlich, durch ein Mischen des erfindungsgemäßen Klinkers mit Portlandzement in einem Bindemittel realisiert werden.

Ein weiterer Vorteil der erfindungsgemäßen Zements bzw. der Bindemittelmischung daraus ist die Bildung verschiedener Phasen im Zuge der Hydratation (z.B. Ettringit [AFₜ], Monophasen [AFₘ], Metall-Metall Hydroxisalze [LDH], etc..), die verschiedene Schwermetalle sowie weitere Schadstoffe (zum Beispiel, Chloride, etc.) in ihrer Struktur einbauen und somit dauerhaft fixieren können.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiele

In Tabelle 2 sind die verwendeten Rohstoffe, mit denen die im Folgenden beschriebenen Beispiele durchgeführt wurden, anhand ihrer oxidischen Hauptbestandteile und ihrer Mahlfeinheit charakterisiert. Der Gewichtsverlust nach einem Tempern bei 1050 °C ist ebenfalls angegeben. Tabelle 3 zeigt die mineralogische Phasenzusammensetzung der verwendeten industriellen Nebenprodukte.

**Tabelle 2: Elementare Zusammensetzung der verwendeten Rohstoffe (RFA)**

| Rohstoff | | Kalkstein | Flugasche | Sulfatträger | Al-Korr. | Metakaolin |
|---|---|---|---|---|---|---|
| Probe | | K1 | FA1 | MicroA | Al(OH)₃ | MK |
| RFA | Einheit | | | | | |
| GV 1050 °C | % | 43,09 | 0,82 | 4,64 | 34,64 | 1,91 |
| SiO₂ | % | 1,53 | 28,50 | 4,17 | 0,00 | 48,00 |
| Al₂O₃ | % | 0,35 | 12,50 | 1,36 | 65,36 | 41,60 |
| TiO₂ | % | 0,03 | 1,05 | 0,04 | 0,00 | |
| MnO | % | 0,01 | 0,18 | 0,00 | 0,00 | |
| Fe₂O₃ | % | 0,19 | 5,18 | 0,37 | 0,00 | 1,80 |
| CaO | % | 54,50 | 37,40 | 37,40 | 0,00 | 5,70 |
| MgO | % | 0,22 | 4,81 | 1,82 | 0,00 | 0,10 |
| K₂O | % | 0,04 | 0,28 | 0,28 | 0,00 | 0,95 |
| Na₂O | % | 0,00 | 0,07 | 0,06 | 0,00 | |
| SO₃ | % | 0,01 | 7,71 | 49,80 | 0,00 | |
| P₂O₅ | % | 0,01 | 1,27 | 0,00 | 0,00 | |
| Summe | | 99,98 | 99,77 | 99,94 | 100,00 | 100,06 |
| | | | | | | |
| Amorph | % | / | 38,0 | / | / | >95 |
| Dichte | g/cm³ | 2,64 | 2,82 | | | 2,54 |
| Mahlfeinheit nach Blaine | cm²/g | 3350 | 4380 | | | |

**Tabelle 3: Mineralogische Phasenzusammensetzung der verwendeten Flugasche FA1 (QXRD nach Rietveld)**

| Mineral | Einheit | |
|---|---|---|
| Quarz | Gew.-% | 11,5 |
| Cristobalit | Gew.-% | 0,4 |
| Freikalk | Gew.-% | 9,3 |
| Periklas | Gew.-% | 2,8 |
| Anhydrit | Gew.-% | 10,4 |
| Gehlenit | Gew.-% | 6,3 |
| Merwinit | Gew.-% | 4,9 |
| Maghemit | Gew.-% | 1,2 |
| Hematit | Gew.-% | 0,9 |
| Ye'elimit | Gew.-% | 3,1 |
| C₂S | Gew.-% | 8,1 |
| C₄AF | Gew.-% | 3,1 |
| Amorph | Gew.-% | 38,0 |

### Beispiel 1 Tₚᵤᵣ

Eine stöchiometrische Mischung aus CaCO₃ [Merck, p.a.], CaSO₄ [Merck, p.a.] und Quarzmehl [Merck, p.a.] wurde 1 h bei 1100°C gebrannt, anschließend rapide gekühlt, gemahlen und ein weiteres Mal 1 h bei 1100°C gebrannt und rapide gekühlt.

### Beispiel 2 TK_{FA}

Die Rohmischung bestand aus 45 Gew.-% Kalkstein (K1) + 27 Gew.-% FA1, 20 Gew.-% MicroA und 8 Gew.-% Quarzmehl (Merck, p.a.). Das Rohmehl wurde in bei 1100°C gesintert und durchlief nach dem Sintern zur Temperung ein Kühlprogramm bei dem die Temperatur über etwa 35 min von 1100°C auf 850°C gesenkt wurde. Der Klinker wurde dann rapide an der Luft abgekühlt.

### Beispiel 3 TK_{AGS}

Die Rohmischung bestand aus 58 Gew.-% K1 + 8 Gew.-% MK, 24 Gew.-% MircoA und 10 Gew.-% Quarzmehl (Merck, p.a.). Das Rohmehl durchlief dasselbe Programm wie in Beispiel 2.

### Beispiel 4

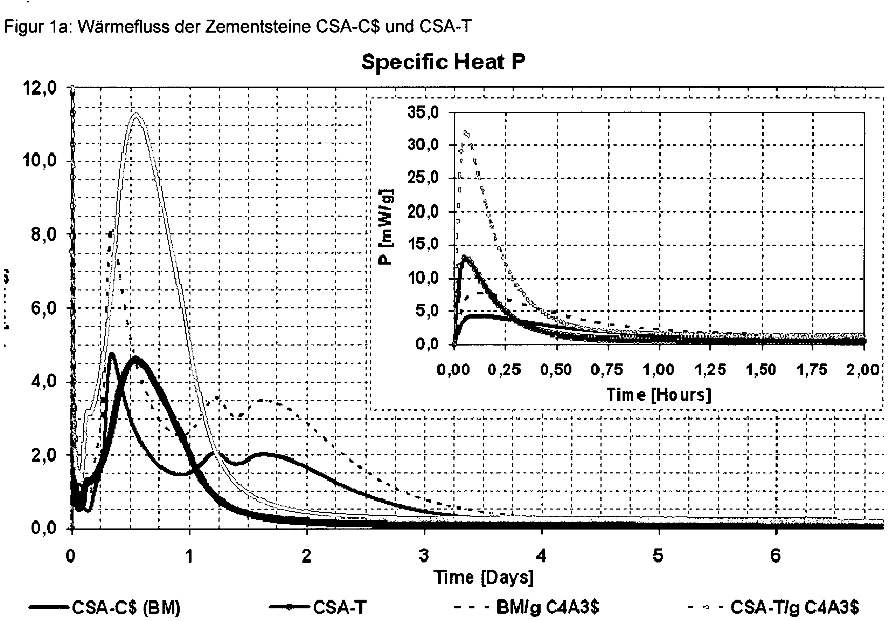

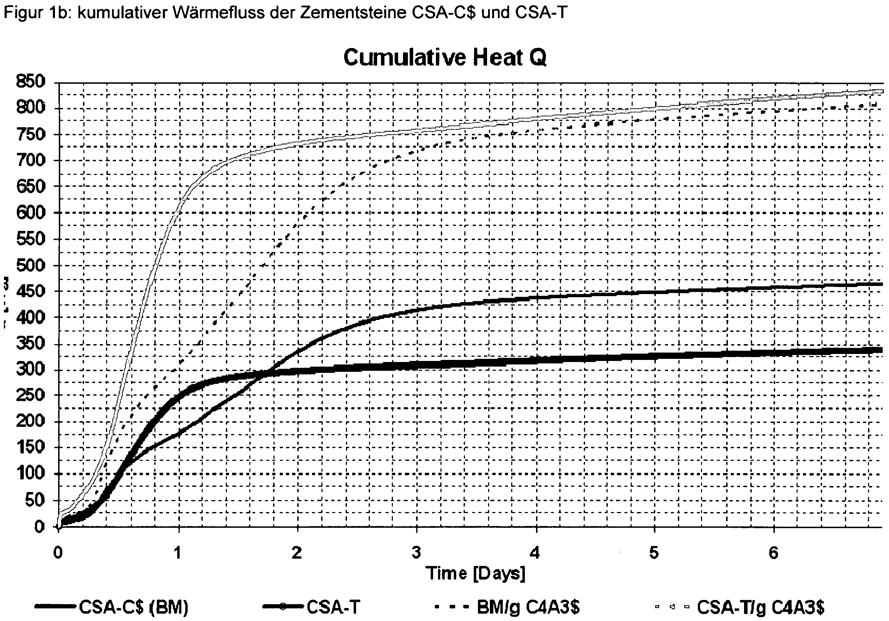

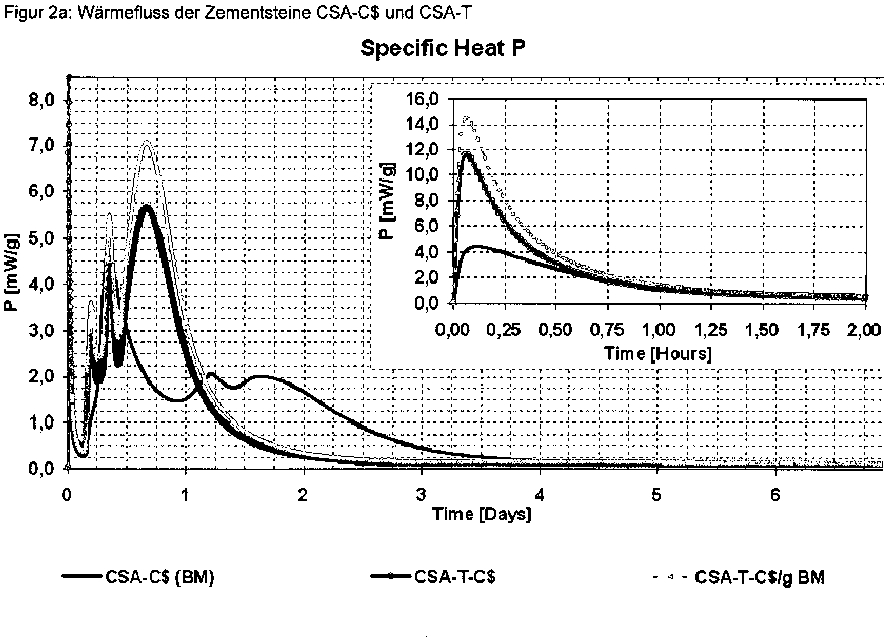

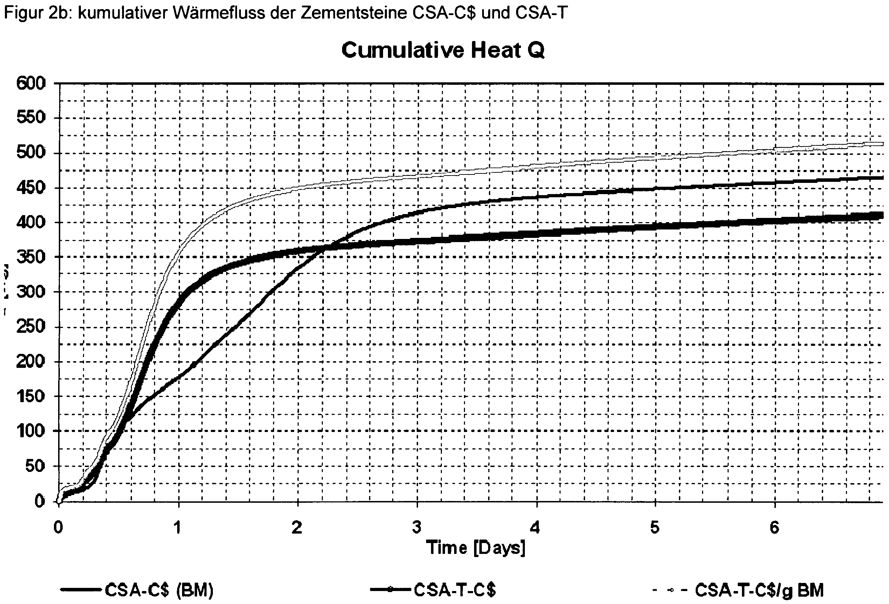

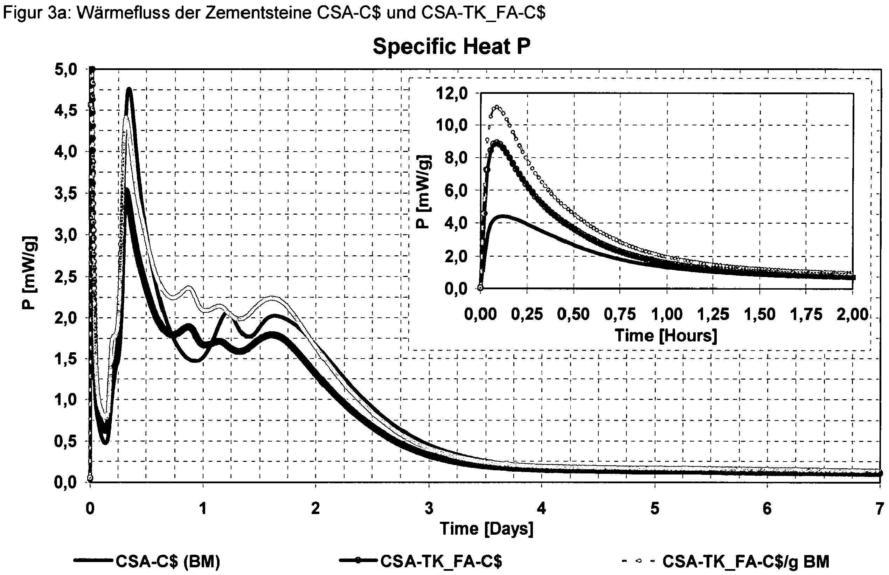

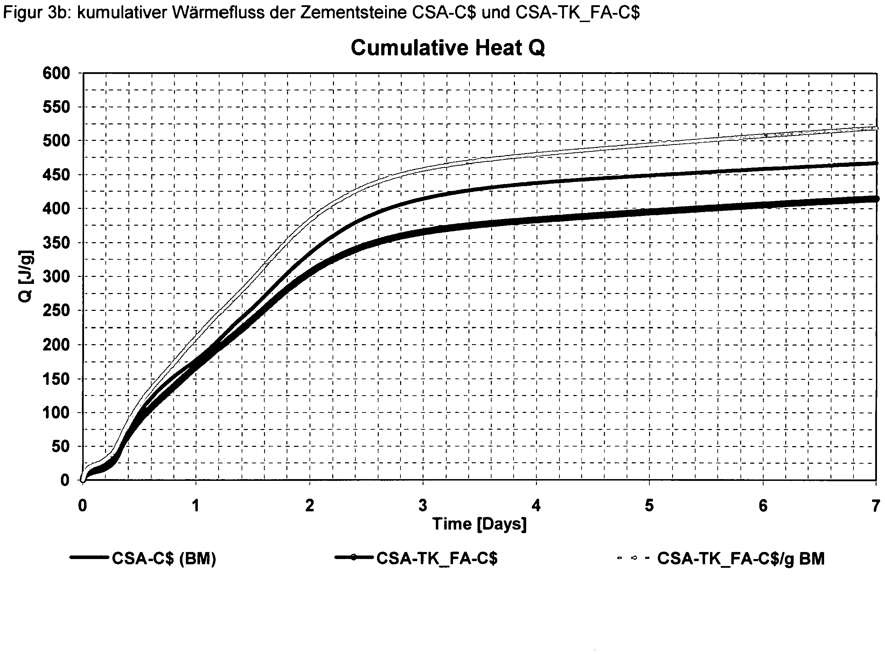

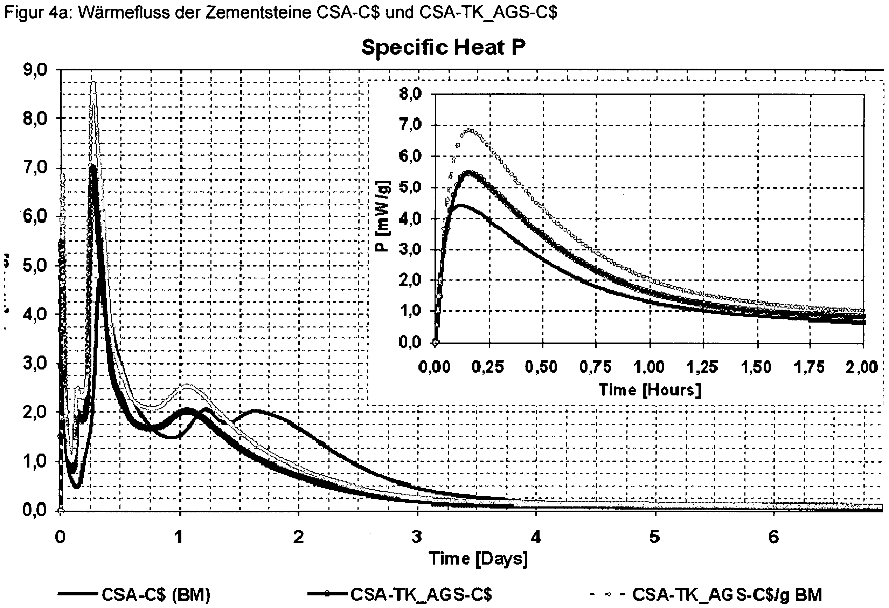

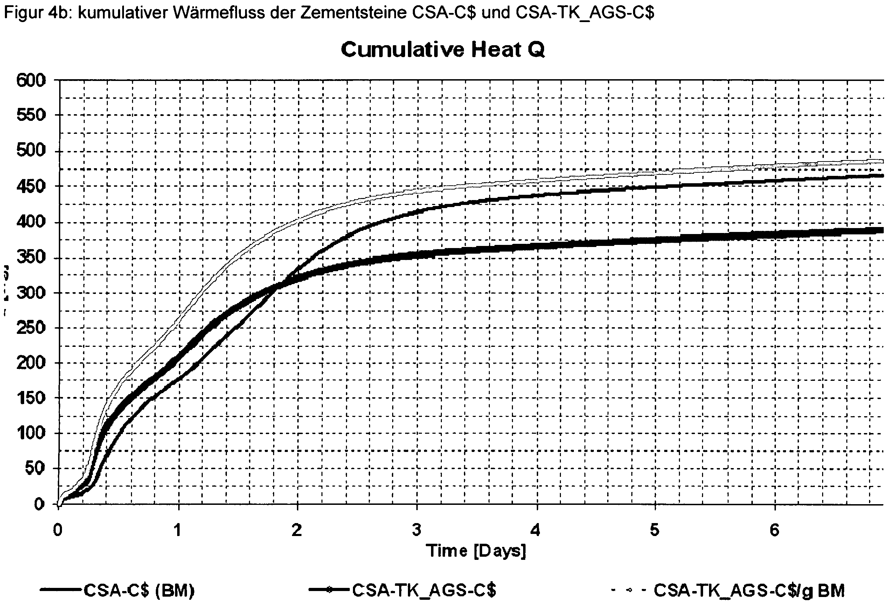

Verschiedene Bindemittel wurden aus einem kommerziellen CSA Zement (Zusammensetzung siehe Tabelle 6) und den drei Ternesitqualitäten aus den Beispielen 1-3 sowie Micro A gemischt. In Tabelle 4 sind die Zusammensetzungen der Ternesite und in Tabelle 5 die Mischungsverhältnisse mit dem Zement aufgelistet, die Figuren 1 bis 4 geben den Wärmefluss und den kumulativen Wärmefluss der Mischungen beim Anmachen mit Wasser mit einem W/B von 0,7 wieder. Tabelle 7 gibt die Mineralogie der Zemente entsprechend Beispiel 4 (QXRD nach Rietveld) und TG Daten (chem. gebundenes Wasser) der Zemente sowie der daraus hergestellten Zementsteine, normiert auf 100% Paste; W/Z 0,7 an.

**Tabelle 4: Chemische (berechnet) und mineralogische Zusammensetzung der Klinker aus den Beispielen 1 bis 3**

| **Oxide** | **Tpur** | **TK_{FA}** | **TK_{AGS}** |
|---|---|---|---|
| SiO₂ | 25,00% | 21,30% | 22,16% |
| Al₂O₃ | -- | 4,75% | 4,94% |
| TiO₂ | -- | 0,38% | 0,04% |
| MnO | -- | 0,07% | 0,01% |
| Fe₂O₃ | -- | 1,96% | 0,45% |
| CaO | 58,34% | 53,20% | 55,34% |
| MgO | -- | 2,23% | 0,77% |
| K₂O | -- | 0,19% | 0,22% |
| Na₂O | -- | 0,04% | 0,02% |
| SO₃ | 16,66% | 15,44% | 16,06% |
| P₂O₅ | -- | 0,44% | 0,01% |

| **Phasen** | | | |
|---|---|---|---|
| Anhydrit | 0,4 | 0,3 | 0,2 |
| C₃A (cub) | -- | 2,2 | -- |
| C₃A (orth) | -- | 1,2 | 0,4 |
| C₂S a'H | -- | 2,7 | 1,4 |
| C₂S beta | -- | 5,7 | 3,2 |
| C₂S gamma | -- | 1,1 | 0,4 |
| ∑C₂S | -- | 9,5 | 5,0 |
| Ternesit | 99,2 | 74,9 | 85,5 |
| Freikalk | <0,1 | 0,3 | 0,3 |
| Periklas | -- | 1,2 | 0,5 |
| C₄A₃S | -- | 9,3 | 7,0 |
| Augit | -- | 1,2 | 1,1 |
| Quarz | 0,4 | -- | -- |

| **Verhältnisse** | | | |
|---|---|---|---|
| CaO/Al₂O₃ | -- | 11,21 | 11,21 |
| Al₂O₃/Fe₂O₃ | -- | 2,42 | 10,92 |
| SO₃ / (Al₂O₃+Fe₂O₃) | -- | 2,30 | 2,98 |
| SO₃/SiO₂ | 0,67 | 0,72 | 0,72 |
| CaO/SO₃ | 3,50 | 3,45 | 3,45 |
| CaO/SiO₂ | 2,33 | 2,50 | 2,50 |
| MgO/SiO₂ | 0,00 | 0,10 | 0,03 |

**Tabelle 5: Mischungen eines kommerziellen Calciumsulfoaluminat-Zements mit Klinkern entsprechend Beispiel 1 - 3**

| Mischung | CSA | Tₚᵤᵣ | TK_{FA} | TK_{AGS} | Micro A |
|---|---|---|---|---|---|
| CSA-C$ | 85 % | | | | 15 % |
| CSA-T | 60 % | 40% | | | |
| CSA-T-C$ | 68 % | 20% | | | 12% |
| CSA-TK_FA-C$ | 68 % | | 20% | | 12% |
| CSA-TK_AGS-C$ | 68 % | | | 20% | 12% |

**Tabelle 6: Chemische Zusammensetzung des verwendeten kommerziellen Calciumsulfoaluminat-Zements**

| | | China CSA |
|---|---|---|
| GV 1050 °C | % | 0,18 |
| SiO₂ | % | 6,93 |
| Al₂O₃ | % | 36,48 |
| TiO₂ | % | 1,64 |
| MnO | % | 0,00 |
| Fe₂O₃ | % | 2,24 |
| CaO | % | 40,61 |
| MgO | % | 2,94 |
| K₂O | % | 0,18 |
| Na₂O | % | 0,00 |
| SO₃ | % | 8,61 |
| P₂O₅ | % | 0,14 |
| ***Sum.*** | % | ***99,94*** |

**Tabelle 7: Mineralogie der Zemente und Zementsteine von Beispiel 4**

| **CSA-C$** | **0 Tage** | **7 Tage** | | **CSA-T** | **0 Tage** | **7 Tage** |
|---|---|---|---|---|---|---|
| Ye'elimit | 33,8% | 0,8% | | Ye'elimit | 23,8% | 0,0% |
| Anhydrit | 8,8% | 2,0% | | Belit (gesamt) | 5,7% | 5,6% |
| Belit (gesamt) | 8,1% | 8,0% | | C₃A cub | 0,9% | 0,4% |
| C₃A cub | 1,3% | 1,0% | | C₄AF | 0,9% | 0,6% |
| C₄AF | 1,3% | 0,5% | | Ternesit (C₅S₂$) | 23,5% | 20,3% |
| Ettringit | 0,0% | 29,7% | | Ettringit | 0,0% | 10,8% |
| Strätlingit | 0,0% | 2,2% | | Strätlingit | 0,0% | 2,4% |
| Spuren | 5,6% | 7,0% | | Spuren | 4,0% | 10,4% |
| Amorph | 0,0% | 41,6% | | Amorph | 0,0% | 33,7% |
| Wasser | 41,2% | 7,1 % | | Wasser | 41,2% | 15,8% |
| | | | | | | |

| **CSA-T-C$** | **0 Tage** | **7 Tage** | | **CSA-TK_FA-C$** | **0 Tage** | **7 Tage** |
|---|---|---|---|---|---|---|
| Ye'elimit | 27,0% | 0,8% | | Ye'elimit | 28,1% | 0,4% |
| Anhydrit | 7,1% | 1,8% | | Anhydrit | 7,1% | 1,0% |
| Belit (qesamt) | 6,4% | 6,4% | | Belit (gesamt) | 7,6% | 7,7% |
| C₃A cub | 1,0% | 0,9% | | C₃A cub | 1,4% | 1,3% |
| C₄AF | 1,0% | 0,5% | | C₄AF | 1,0% | 0,8% |
| Ternesit (C₅S₂$) | 11,8% | 10,1% | | Ternesit (C₅S₂$) | 8,8% | 5,5% |
| Ettringit | 0,0% | 25,8% | | Ettringit | 0,0% | 25,1% |
| Strätlingit | 0,0% | 2,1% | | Strätlingit | 0,0% | 2,4% |
| Spuren | 4,5% | 6,4% | | Spuren | 4,8% | 6,5% |
| Amorph | 0,0% | 35,0% | | Amorph | 0,0% | 39,1% |
| Wasser | 41,2% | 10,2% | | Wasser | 41,2% | 10,3% |
| | | | | | | |

| **CSA-TK_AGS-C$** | **0 Tage** | **7 Tage** | | | | |
|---|---|---|---|---|---|---|
| Ye'elimit | 27,8% | 0,4% | | | | |
| Anhydrit | 7,1% | 1,5% | | | | |
| Belit (gesamt) | 7,0% | 7,2% | | | | |
| C₃A cub | 1,0% | 0,8% | | | | |
| C₄AF | 1,0% | 0,4% | | | | |
| Ternesit (C₅S₂$) | 10,1% | 8,1% | | | | |
| Ettringit | 0,0% | 23,5% | | | | |
| Strätlingit | 0,0% | 2,2% | | | | |
| Spuren | 4,7% | 5,3% | | | | |
| Amorph | 0,0% | 39,5% | | | | |
| Wasser | 41,2% | 11,2% | | | | |

## Patentansprüche

1. Verfahren zur Herstellung eines Ternesit-Klinkers, **dadurch gekennzeichnet, dass** eine Rohmehlmischung, die mindestens Quellen für CaO, SiO₂, und SO₃ enthält, gesintert wird, wobei die Temperatur beim Sintern im Bereich von 900 bis 1300 °C so eingestellt wird, dass der Ternesit-Klinker einen Gehalt an C₅S₂$ im Bereich von 20 bis 100 Gew.-% und einen Gehalt an C₄(AₓF₍₁₋ₓ₎₃$ unter 15 Gew.-%, jeweils bezogen auf das Gesamtgewicht des Klinkers, aufweist.

2. Verfahren gemäß Anspruch 1, **dadurch gekennzeichnet, dass** die Temperatur beim Sintern in einem Bereich von 900 bis 1200 °C, vorzugsweise bei 1050 bis 1150 °C liegt.

3. Verfahren gemäß Anspruch 1 oder 2, **dadurch gekennzeichnet, dass** die Rohmehlmischung zusätzlich Quellen für Al₂O₃ sowie Fe₂O₃ enthält.

4. Verfahren gemäß mindestens einem der Ansprüche 1 bis 3, **dadurch gekennzeichnet, dass** C₅S₂$ durch Einbau eines oder mehrerer Fremdionen aus der Gruppe der Halogene, Nichtmetalle, Alkali- und Erdalkalimetalle, sowie Vertreter der Übergangs- und Halbmetalle und Metalle in die Kristallstruktur stabilisiert wird.

5. Verfahren gemäß mindestens einem der Ansprüche 1 bis 4, **dadurch gekennzeichnet, dass** man dem Rohmehl Materialien, welche Phosphat, Fluorid, Nitrat und/oder Chlorid bereitstellen, zufügt.

6. Verfahren gemäß Anspruch 4 oder 5, **dadurch gekennzeichnet, dass** die Temperatur beim Sintern im Bereich von 1100 bis 1300 °C liegt.

7. Ternesit-Klinker erhältlich durch ein Verfahren gemäß mindestens einem der Ansprüche 1 bis 6, enthaltend 20 bis 100 Gew.-% der Klinkerphase C₅S₂$ und die weiteren Klinkerphasen (α; β) C₂S, C₄(AₓF₍₁₋ₓ₎)₃$ mit x von 0,1 bis 1,0, C₂(AyF_{(1-y)}) mit y von 0,2 bis 0,8, reaktive Aluminate, Periklas (M) und Nebenphasen in folgenden Anteilen:
| | | |
|---|---|---|
| • | (α, β) C₂S | 0 bis 80 Gew.-% |
| • | C₄(AₓF₍₁₋ₓ₎₃$ | 0 bis < 15 Gew.-% |
| • | C₂(AyF_{(1-y)}) | 0 bis 30 Gew.-% |
| • | Reaktive Aluminate | 0 bis 20 Gew.-% |
| • | Periklas (M) | 0 bis 25 Gew.-% |
| • | Nebenphasen | 0 bis 30 Gew.-% |
wobei sich die Anteile der Klinkerphasen zu 100 % addieren.

8. Verfahren zur Herstellung eines Bindemittels enthaltend Calciumsulfoaluminat, **dadurch gekennzeichnet, dass** ein Ternesit-Klinker gemäß Anspruch 7 oder ein Zement daraus in einer Menge im Bereich von 10 bis 90 Gew.-% und mindestens ein Calciumsulfoaluminat-Klinker mit einem Gehalt von 10 bis 80 Gew.-% C₄(AₓF₍₁₋ₓ₎₃$ mit x von 0,1 bis 1,0 oder ein Zement daraus in einer Menge im Bereich von 10 bis 90 Gew.-% miteinander vermischt werden.

9. Verfahren gemäß Anspruch 8, **dadurch gekennzeichnet, dass** der Ternesit-Klinker und der Calciumsulfoaluminat-Klinker gemeinsam oder getrennt, mit oder ohne Sulfatträger in Form von Alkali- und / oder Erdalkalisulfaten, vorzugsweise in Form von Gips und / oder Halbhydrat und / oder Anhydrit und / oder Magnesiumsulfat, auf Feinheiten (nach Blaine) im Bereich von 2000 bis 10000 cm²/g, vorzugsweise im Bereich von 3000 bis 6000 cm²/g und besonders bevorzugt von 4000 bis 5000 cm²/g gemahlen werden.

10. Verfahren gemäß Anspruch 8 oder 9, **dadurch gekennzeichnet, dass** der Ternesit-Zement eine Partikelgrößenverteilung mit einem d₅₀ kleiner 20 µm und d₉₀ kleiner 100 µm, oder einem d₅₀ kleiner 5 µm und einem d₉₀ kleiner 20 µm oder mit einem d₅₀ kleiner 0,1 µm und einem d₉₀ kleiner 2 µm aufweist.

11. Bindemittel erhältlich durch ein Verfahren gemäß mindestens einem der Ansprüche 8 bis 10.

12. Bindemittel gemäß Anspruch 11, **dadurch gekennzeichnet, dass** es den Calciumsulfoaluminat-Klinker oder Zement in einer Menge im Bereich von 20 bis 70 Gew.-%, vorzugsweise von 30 bis 60 Gew.-% und den Ternesit-Klinker oder Zement in einer Menge im Bereich von 30 bis 80 Gew.-%, vorzugsweise von 40 bis 70 Gew.-% enthält, wobei sich die Anteile zu 100 % addieren.

13. Bindemittel gemäß Anspruch 11 oder 12, **dadurch gekennzeichnet, dass** latent hydraulische Materialien und/oder Puzzolane in einem Bereich von 5 bis 80 Gew.-%, vorzugsweise von 20 bis 60 Gew.-% enthalten sind, wobei sich die Anteile zu 100 % addieren.

14. Bindemittel gemäß Anspruch 13, **dadurch gekennzeichnet, dass** die latent hydraulische Materialien und/oder Puzzolane ausgewählt sind unter getemperten Tonen, z.B. Metakaolin, Schiefer, Flugaschen, Hüttensanden sowie künstlichen, z.B. puzzolanischen und latent hydraulischen, Gläsern.

15. Bindemittel gemäß mindestens einem der Ansprüche 11 bis 14, **dadurch gekennzeichnet, dass** es zusätzlich weitere hydraulisch reaktive Materialien, wie Portlandzement und/oder nicht hydraulisch reaktive Materialien, wie gemahlenen Kalkstein, gefälltes CaCO₃, Ca(OH)₂, Mg(OH)₂, Silica fume in einem Bereich von 1 bis 30 Gew.-%, vorzugsweise von 5 bis 20 Gew.-% enthält.

16. Bindemittel gemäß mindestens einem der Ansprüche 11 bis 15, **dadurch gekennzeichnet, dass** es als Zusatzmittel einen oder mehrere Abbinde- und / oder Erhärtungsbeschleuniger, vorzugsweise ausgewählt unter Komponenten mit verfügbarem Aluminium, die in Kontakt mit Wasser Aluminium, zum Beispiel in der Form von Al(OH)₄⁻ oder amorphes Al(OH)₃-Gel, freisetzen, wie lösliche Alkali-Aluminate [z.B. Na₂Al₂O₄, K₂Al₂O₄, etc.], amorphes Aluminiumhydroxid (z.B. Al(OH)₃), Calciumaluminatzement und / oder Geopolymer Binder in einer Menge im Bereich von 0,1 bis 15 Gew.-%, vorzugsweise von 1 bis 8 Gew.-% enthält.

17. Bindemittel gemäß mindestens einem der Ansprüche 11 bis 16, **dadurch gekennzeichnet, dass** es als Zusatzmittel Lithiumsalze und -hydroxide und/oder andere Alkalisalze und -hydroxide und Alkalisilikate enthält, wobei Zusatzmittel, wie zum Beispiel Alkalisalze, -silikate und -hydroxide, welche den pH-Wert der Lösung und damit einhergehend die Reaktivität von C₅S₂$ erhöhen, besonders bevorzugt sind.

18. Verwendung eines Bindemittels gemäß einem der Ansprüche 11 bis 17 in Kombination mit Gesteinskörnungen zur Herstellung von Beton und Mörtel, wobei ein Wasser/Bindemittelwert von 0,2 bis 2 eingestellt wird.

19. Verwendung eines Bindemittels gemäß einem der Ansprüche 11 bis 18 zur Immobilisierung von Schadstoffen oder als Dichtwandmasse, wobei vorzugsweise adsorptiv wirksame Zusätze wie Zeolithe und/oder Ionenaustauscherharze, zugefügt werden.

20. Verwendung eines Ternesit-Klinkers gemäß mindestens einem der Ansprüche 1 bis 7 als Additiv zu Calciumsulfoaluminatbindemittel, **dadurch gekennzeichnet, dass** der Ternesit-Klinker mit dem Calciumsulfoaluminat-Klinker gemischt und beide gemeinsam, ggfs. unter Zusatz weiterer Komponenten, zu Zement gemahlen werden oder der gemahlene Ternesit-Klinker mit Calciumsulfoaluminatzement, ggfs. unter Zusatz weiterer Komponenten, zu dem Bindemittel vermischt werden.
